# DEMANDE DE BREVET EUROPEEN

(11) **EP 3 035 190 A2**
(43) Date de publication de la demande: **22.06.2016**
(21) Numéro de dépôt: 15200899.1
(22) Date de dépôt: 17.12.2015
(51) Int. Cl.: G06F 9/44

(54) **AIDE AU DÉVELOPPEMENT D'APPLICATIONS INFORMATIQUES**

(30) Priorité: 18.12.2014 FR 1462821
(71) Demandeur: Orange, 75015 Paris (FR)
(72) Inventeur: OMBROUCK, Christine, 14790 Verson (FR); DESHAYES, Françoise, 14200 Hérouville Saint Clair (FR)
(74) Mandataire: Milet, Isabelle

(57) **Abrégé**

L'invention concerne un procédé d'obtention d'aide au développement d'une application logicielle, comportant l'affichage sur un écran d'une interface graphique comprenant au moins une première vignette et le déclenchement, suite la détection d'une action d'un utilisateur relativement à la première vignette, de l'exécution d'une fonction logicielle associée à la première vignette.

Selon l'invention, le procédé est adapté à afficher au moins une deuxième vignette associée à la première vignette, à détecter une action utilisateur relative à la deuxième vignette, à obtenir, suite à cette détection, un message textuel contenant au moins une instruction de code relative à l'exécution de la fonction logicielle et à afficher le message textuel.

L'invention se rapporte également à un procédé de fourniture d'aide au développement d'une application logicielle.

L'invention se rapporte également à un terminal (T) et à un serveur (SV1) mettant en oeuvre le procédé d'obtention, respectivement le procédé de fourniture.

## Description

L'invention concerne le domaine du développement d'applications informatiques, appelées également logiciels ou programmes.

Lors du développement d'une application informatique, un développeur programmeur en charge de ce développement, peut avoir besoin de briques de fonctionnalités existantes développées auparavant, par exemple dans des logiciels tiers.

Ces briques de fonctionnalités sont intégrées dans des applications informatiques et sont rarement accessibles. Des documents, appelés généralement « code source » contenant sous forme textuelle, les instructions de code de ces briques sont parfois disponibles. Ces documents sont plus ou moins documentés et il est souvent difficile et consommateur de temps pour un développeur de comprendre le fonctionnement de ces briques.

Par ailleurs, des sociétés proposent, généralement moyennant une rémunération, l'accès à de telles briques logicielles.

Par accès, il faut entendre ici l'envoi d'une requête commandant l'exécution de la brique choisie et la réception en retour d'une réponse contenant un résultat d'exécution de cette brique.

Plus précisément, ces fonctions sont interrogeables via une interface de programmation, souvent désignée par le terme API pour « Application Programming Interface ».

Ces fonctions sont offertes par une bibliothèque logicielle ou un service web, le plus souvent accompagnée d'une description qui spécifie la manière d'interagir avec chaque fonction et plus précisément l'API associée à chaque fonction,

Cette description est un fichier texte décrivant les fonctionnalités de la fonction et les paramètres à transmettre à l'API ainsi que les paramètres reçues dans une réponse à une requête.

Cette description est en général très détaillée. De ce fait, il est long et fastidieux pour un développeur programmeur de comprendre rapidement d'une part, comment se servir des fonctionnalités et d'autre part, quels sont les paramètres et les formats de ces paramètres à utiliser pour interroger une brique logicielle via l'API associée et comment formuler une requête pour obtenir un résultat recherché.

Un des buts de l'invention est de remédier à des insuffisances/inconvénients de l'état de la technique et/ou d'y apporter des améliorations.

A cette fin, l'invention propose un procédé d'obtention d'aide au développement d'une application logicielle. Ce procédé comporte une étape d'affichage sur un écran d'une interface graphique comprenant au moins une première vignette, une détection d'une action d'un utilisateur relativement à ladite au moins une première vignette déclenchant une exécution d'une fonction logicielle associée à ladite au moins une première vignette.

Il comporte les étapes suivantes, mises en oeuvre par un terminal:
- affichage d'au moins une deuxième vignette associée à ladite au moins une première vignette ;
- détection d'une action utilisateur relative à ladite au moins une deuxième vignette ;
- suite à ladite détection, obtention d'un message textuel contenant au moins une instruction de code relative à l'exécution de ladite fonction logicielle ; et
- affichage dudit message textuel.

Grâce à la deuxième vignette, il est ainsi possible à un utilisateur, qui est un développeur de programmes, d'obtenir une ou plusieurs instructions de code relatives à une fonction logicielle associée à la première vignette. La première vignette permet d'exécuter une fonction logicielle. La deuxième vignette permet d'obtenir une ou plusieurs instructions de code. Les instructions de code sont reçues sous la forme d'un texte affiché sur un écran du terminal, par exemple dans une fenêtre spécifique. L'utilisateur peut ainsi récupérer le texte affiché et l'insérer par exemple à l'aide d'un « copier/coller » dans un programme en cours de développement ou l'utiliser pour tester une commande, par exemple au sein d'un navigateur web, ou plus généralement à partir d'une interface de commande.

Les instructions de code obtenues renseignent également l'utilisateur sur la syntaxe à utiliser.

Grâce au procédé de l'invention, il est beaucoup plus aisé pour un développeur de développer un programme.

Il n'est pas nécessaire pour lui d'étudier la documentation complète décrivant les fonctionnalités de la fonction logicielle.

Selon un mode de réalisation particulier du procédé d'obtention, la fonction logicielle est exécutée par un premier serveur et sollicite un module prédéfini hébergé sur un deuxième serveur et ladite au moins une instruction de code est exécutable par ledit module.

Dans ce mode de réalisation, le terminal fait appel à une fonction logicielle installée sur un premier serveur. Cette fonction logicielle fait appel à un module prédéfini hébergé par un deuxième serveur. Ce module est par exemple une API (interface de programmation ou « Application Programmable Interface » en anglais).

Grâce au procédé, il est possible pour un utilisateur développeur d'obtenir les instructions de code pour interroger directement le module.

Selon un mode de réalisation particulier, le procédé d'obtention comporte une étape d'envoi au premier serveur d'une requête d'instruction de code, ladite requête étant formulée dans un premier langage et ledit message textuel est reçu dans une réponse à ladite requête, ladite réponse est formulée dans le premier langage et ladite au moins une instruction de code est formulée dans un deuxième langage.

Les instructions de code sont formulées dans un langage adapté au module. Le développeur peut ainsi intégrer directement les instructions de code dans son programme sans avoir à les convertir dans un autre langage.

De même, il peut facilement utiliser un autre langage pour développer une fonction logicielle appelant le module.

Selon un mode de réalisation particulier, le procédé d'obtention comporte :
- une étape de réception d'une demande de paramètres contenant au moins un identifiant d'au moins un paramètre dudit module ;
- une étape d'obtention au moyen d'une interface utilisateur dudit terminal, d'au moins une valeur pour ledit au moins un paramètre ;
- une étape d'envoi au premier serveur d'une requête d'instruction de code, ladite requête contenant au moins une valeur pour ledit au moins un paramètre ;
   ledit message textuel est reçu dans une réponse à ladite requête et ladite au moins une instruction de code est déterminée par ledit premier serveur en fonction de ladite au moins une valeur reçue.

L'insertion de valeurs de paramètres permet d'obtenir des instructions de code dans lesquels ces paramètres sont insérés.

Selon un mode de réalisation particulier du procédé d'obtention, la réponse comprend en outre un deuxième message textuel contenant une réponse à ladite commande formulée par ledit module.

Le procédé permet d'obtenir un message de type texte contenant une réponse d'exécution fournie par le module.

L'utilisateur peut ainsi savoir le format de cette réponse. La réponse lui donne des informations sur les données présentes dans la réponse. Cela permet à un utilisateur développeur d'exploiter plus facilement les éléments de réponse fournis par le module.

L'invention se rapporte également à un procédé de fourniture d'aide au développement d'une application logicielle comportant les étapes suivantes, mises en oeuvre par un premier serveur apte à exécuter une fonction logicielle sollicitant un module prédéfini hébergé sur un deuxième serveur :
- réception en provenance d'un terminal d'une requête d'instruction de code ;
- détermination d'une commande contenant au moins une instruction de code exécutable par ledit module ;
- construction d'un message textuel contenant ladite commande ;
- transmission d'une réponse à ladite requête contenant le message textuel construit.

Suite à une requête en provenance d'un terminal, une commande contenant des instructions de code est fournie à ce terminal. Les instructions de code sont relatives à l'exécution d'une fonction logicielle prédéfinie.

Selon un mode de réalisation particulier, le procédé de fourniture comporte une étape de transmission à destination dudit terminal, d'une demande de paramètres contenant au moins un identifiant d'au moins un paramètre dudit module, la requête d'instruction de code contient au moins une valeur pour ledit au moins un paramètre et ladite commande est déterminée en fonction de ladite au moins une valeur reçue.

Selon un mode de réalisation particulier du procédé de fourniture, ladite commande comprend au moins une valeur d'au moins un paramètre supplémentaire insérée par ledit premier serveur.

Des paramètres supplémentaires peuvent être nécessaires dans une commande transmise à un module du deuxième serveur. Ces paramètres supplémentaires correspondent à des valeurs connues par le premier serveur et non nécessairement connues de l'utilisateur ou que l'utilisateur a fourni précédemment.

Un tel paramètre est par exemple une donnée chiffrée avec une clé, la clé étant accessible au premier serveur uniquement si une procédure d'authentification a permis d'authentifier l'utilisateur.

Selon un mode de réalisation particulier du procédé de fourniture, la requête d'instruction de code comprend au moins une valeur définissant au moins un paramètre de langage de programmation et dans lequel la dite commande est formulée dans ledit langage.

La valeur définissant au moins un paramètre de programmation permet à un utilisateur de choisir un langage de programmation parmi plusieurs langages acceptés par le module.

Selon un mode de réalisation particulier, le procédé de fourniture comporte une étape d'authentification dudit utilisateur et dans lequel la réponse ne contient pas ladite commande et contient un message signalant un problème d'authentification si l'authentification n'est pas réussie.

Ainsi, le ou les instructions de code ne sont fournies qu'à des utilisateurs autorisés, par exemple des utilisateurs ayant souscrit à un service permettant l'obtention de ces instructions de code.

L'invention se rapporte également à un terminal comportant un module d'affichage pour afficher sur un écran une interface graphique comprenant au moins une première vignette, un module de détection d'une action d'un utilisateur, un module de déclenchement d'une exécution d'une fonction logicielle associée à ladite au moins une première vignette en cas de détection d'une action utilisateur relativement à ladite au moins une première vignette.

Le module d'affichage du terminal est configuré pour afficher au moins une deuxième vignette associée à ladite au moins une première vignette et le terminal comporte un module d'obtention pour obtenir, suite à une détection d'une action utilisateur relative à ladite au moins une deuxième vignette, un message textuel contenant au moins une instruction de code relative à l'exécution de ladite fonction logicielle. Le module d'affichage du terminal est configuré pour afficher ledit message textuel.

L'invention se rapporte encore à un premier serveur apte à exécuter une fonction logicielle sollicitant un module prédéfini hébergé sur un deuxième serveur. Le premier serveur comporte :
- un module de réception en provenance d'un terminal d'une requête d'instruction de code ;
- un module de détermination d'une commande contenant au moins une instruction de code exécutable par ledit module ;
- un module de construction d'un message textuel contenant ladite commande ;
- un module de transmission d'une réponse à ladite requête contenant le message textuel construit.

Selon une implémentation préférée, les différentes étapes du procédé d'obtention respectivement du procédé de fourniture, selon l'invention sont mises en oeuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé d'obtention ou d'un procédé de fourniture d'aide. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante d'un mode de réalisation donné à titre d'exemple non limitatif, en référence aux dessins annexés, dans lesquels :
- la figure 1 est un schéma illustrant un terminal selon un mode de réalisation de l'invention,
- la figure 2 est un organigramme illustrant les différentes étapes d'un procédé d'obtention et d'un procédé de fourniture selon un premier mode de réalisation de l'invention,
- la figure 3 illustre un premier exemple d'interface graphique,
- la figure 4 est un schéma illustrant un système selon un mode de réalisation de l'invention,
- la figure 5 est un organigramme illustrant les étapes d'un procédé d'obtention et d'un procédé de fourniture selon un deuxième mode de réalisation de l'invention,

Les figures 6, 7 et 8 illustrent des exemples d'interfaces graphiques.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

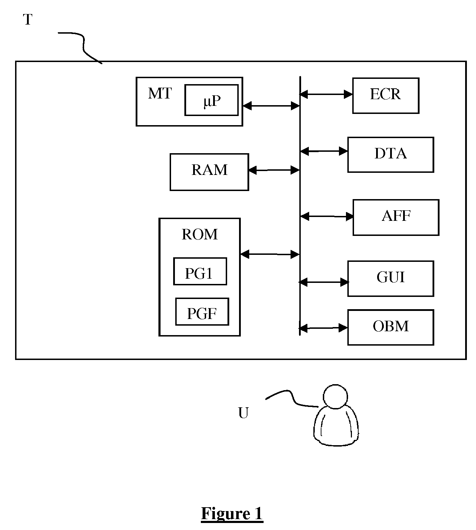

Un mode de réalisation d'un procédé d'obtention et d'un procédé de fourniture va maintenant être décrit en référence aux figures 1 à 3.

La **figure 1** représente un terminal d'utilisateur T.

Le terminal T est par exemple un ordinateur de type PC (« Personal Computer »).

A titre d'alternative, le terminal T est un téléphone mobile ou un PDA (« Personal Digital Assistant »).

Le terminal T comporte de façon connue, notamment une unité de traitement MT équipée d'un microprocesseur, une mémoire morte de type ROM, une mémoire vive de type RAM et un écran ECR.

Le terminal T peut comporter de manière classique et non exhaustive les éléments suivants: un microphone, un haut-parleur, un lecteur de disque, un clavier, un écran de visualisation, un moyen de stockage...

Le terminal T comporte également un module d'affichage AFF, un module d'interface utilisateur GUI, un module de détection d'action utilisateur DTA et un module d'obtention de message OBM.

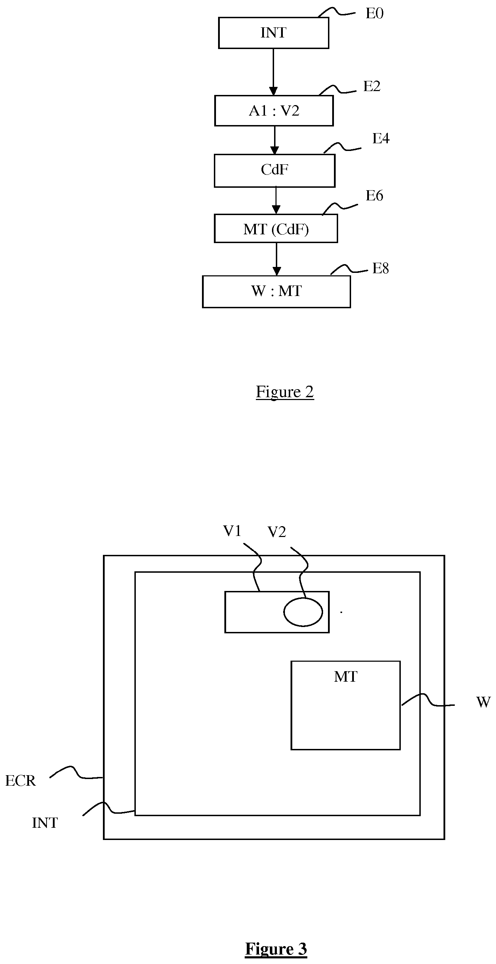

La mémoire morte de type ROM comporte des registres mémorisant un programme d'ordinateur PG1 comportant des instructions de programme adaptées à mettre en oeuvre un procédé d'obtention selon un mode de réalisation de l'invention décrit ultérieurement en référence à la figure 2.

La mémoire morte de type ROM comporte également des registres mémorisant un programme d'ordinateur PGF comportant des instructions de programme adaptées à mettre en oeuvre une fonction logicielle F1.

Les instructions de programme représentent des instructions de code au sens de l'invention.

A titre d'alternative, le programme d'ordinateur PGF est hébergé sur un serveur distant accessible par le terminal T.

Un mode de réalisation d'un procédé d'obtention et d'un procédé de fourniture, mis en oeuvre dans le terminal T, va maintenant être décrit en référence à la figure 2.

Lors d'une étape préalable E0, le module de traitement MT du terminal T commande l'affichage, par le module d'affichage AFF, d'une interface graphique INT sur l'écran ECR du terminal T.

L'interface graphique INT est typiquement une fenêtre affichée sur l'écran ECR.

L'interface graphique INT comprend une première vignette V1 et une deuxième vignette V2 associée à la première vignette V1.

La **figure 3** représente l'interface graphique INT et les vignettes V1 et V2.

La deuxième vignette est ici superposée à la première vignette V1. Cette superposition permet de mettre en évidence le fait que la deuxième vignette V2 est associée à la première vignette V1.

D'autres moyens de mise en évidence de l'association des deux vignettes peuvent être mis en oeuvre comme par exemple une juxtaposition des deux vignettes, l'affichage d'une flèche entre les deux vignettes...

Un utilisateur U du terminal T peut au moyen du module d'interface utilisateur GUI, par exemple une souris d'ordinateur, cliquer dans la zone de l'écran représentant la vignette V1 ou dans la zone de l'écran représentant la vignette V2.

Une action de l'utilisateur relative à la vignette V1 déclenche l'exécution de la fonction logicielle F1.

De façon classique, l'exécution de la fonction logicielle F1 permet par exemple d'obtenir un résultat qui est par exemple affiché sur l'écran ECR.

Lors d'une étape E2, le module de détection DTA du terminal T détecte une action A1 de l'utilisateur du terminal T relative à la deuxième vignette V2.

L'action A1 est par exemple un clic ou un double clic effectué à l'aide d'une souris d'ordinateur reliée au terminal T, dans la zone de l'écran ECR représentant la deuxième vignette V2.

L'étape E2 est suivie d'une étape E4 lors de laquelle le module d'obtention OBM du terminal T accède à la mémoire ROM, et plus particulièrement à une zone de la mémoire où sont stockées les instructions de code de la fonction F1, c'est-à-dire les instructions de code du programme PGF, et obtient les instructions de code CdF de la fonction F1.

L'étape E4 est suivie d'une étape E6 lors de laquelle le module d'obtention OBM inclut tout ou partie des instructions de code obtenues CdF dans un message textuel MT.

Le module d'obtention OBM du terminal T obtient ainsi un message textuel MT contenant au moins une instruction de code relative à l'exécution de la fonction logicielle F1.

Lors d'une étape E8, le module d'affichage AFF du terminal T affiche le message textuel obtenu MT sur l'écran ECR.

Le message textuel MT est par exemple affiché dans une fenêtre supplémentaire W de l'interface graphique INT.

La figure 3 illustre également la fenêtre W contenant le message textuel MT.

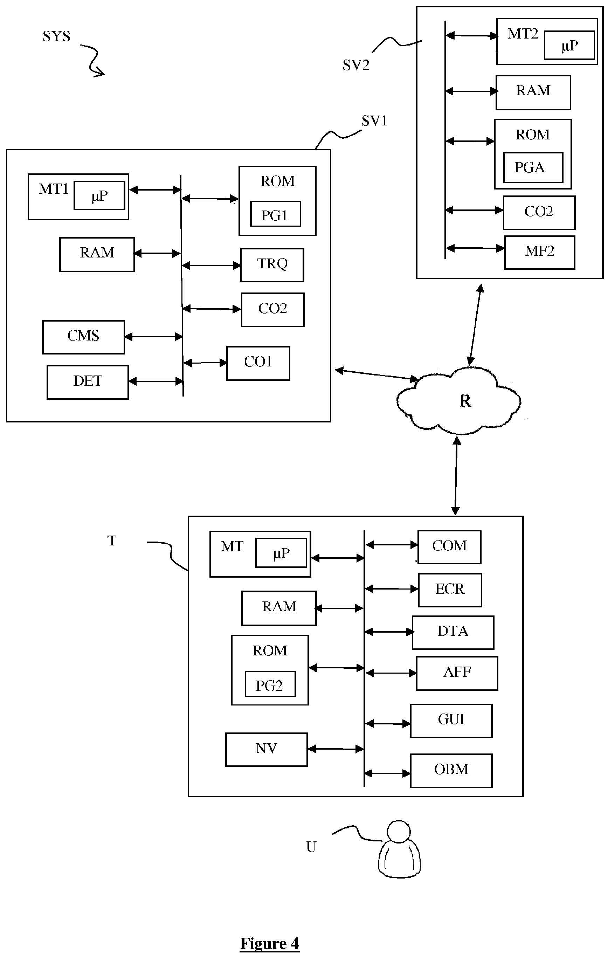

Un deuxième mode de réalisation d'un procédé d'obtention et d'un procédé de fourniture va maintenant être décrit en référence aux figures 4 à 8.

En référence à la **figure 4****,** un système SYS comprend un terminal d'utilisateur T, un premier serveur SV1 et un deuxième serveur SV2.

Le terminal T est par exemple un ordinateur de type PC (« Personal Computer »).

A titre d'alternative, le terminal T est un téléphone mobile ou un PDA (« Personal Digital Assistant »).

Plus généralement, le terminal T est un équipement apte à accéder à un réseau de communication R au moyen d'un navigateur web dudit équipement.

De façon connue, un navigateur web est un logiciel conçu pour consulter le World Wide Web.

Le terminal T comporte de façon connue, notamment une unité de traitement MT équipée d'un microprocesseur, une mémoire morte de type ROM, une mémoire vive de type RAM et un écran de visualisation ECR.

Le terminal T peut comporter de manière classique et non exhaustive les éléments suivants: un microphone, un haut-parleur, un lecteur de disque, un clavier, un moyen de stockage...

Le terminal T comporte également un navigateur web NV, un module d'affichage AFF, un module d'interface utilisateur GUI, un module de détection d'action utilisateur DTA, un module d'obtention de message OBM et un module de communication COM adapté pour communiquer avec le premier serveur SV1 via le réseau de communication R.

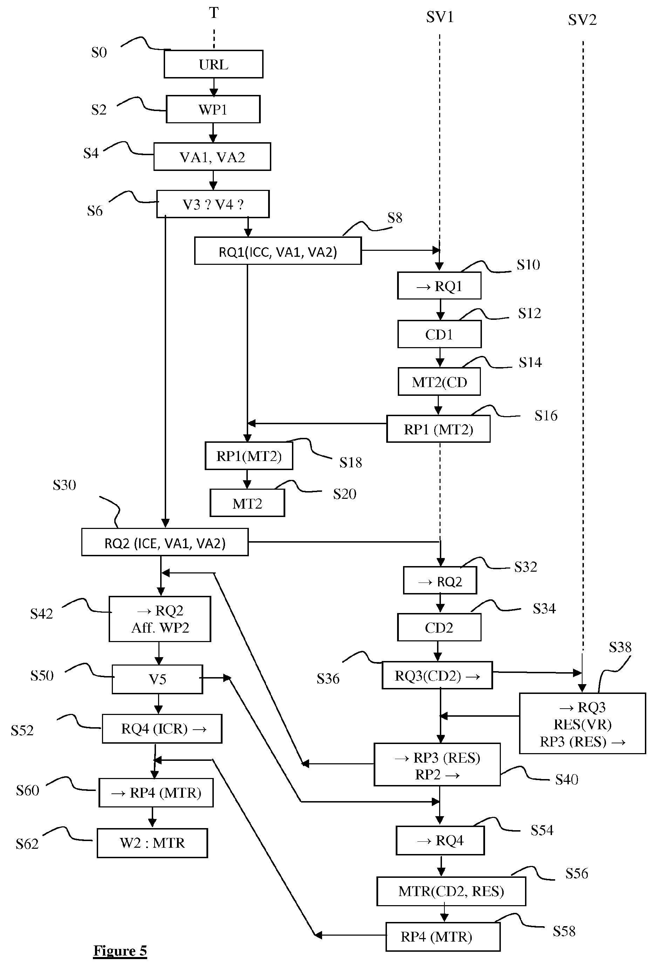

La mémoire morte de type ROM comporte des registres mémorisant un programme d'ordinateur PG2 comportant des instructions de programme adaptées à mettre en oeuvre un procédé d'obtention selon un mode de réalisation de l'invention décrit ultérieurement en référence à la figure 5.

Le premier serveur SV1 et le deuxième serveur SV2 sont des équipements informatiques présentant la structure d'un ordinateur. Ils sont aptes à communiquer entre eux via le réseau de communication R.

A titre d'alternative, le premier serveur SV1 et le deuxième serveur SV2 communiquent entre eux via une liaison de communication dédiée, par exemple une liaison de communication d'un réseau privé ou une liaison filaire.

Le premier serveur SV1 comporte de façon connue, notamment une unité de traitement MT1 équipée d'un microprocesseur, une mémoire morte de type ROM et une mémoire vive de type RAM.

Le premier serveur SV1 comporte également un module de communication CO1 pour communiquer avec le terminal T, par exemple via le réseau de communication R, et un module de communication CO2 pour communiquer avec le deuxième serveur SV2.

Le premier serveur SV1 comporte également un module de traitement de requêtes TRQ, un module de détermination DET et un module de construction de message CMS.

Le deuxième serveur SV2 comporte de façon connue, notamment une unité de traitement MT2 équipée d'un microprocesseur, une mémoire morte de type ROM et une mémoire vive de type RAM.

Le deuxième serveur S2 comporte également un module de communication CO2 pour communiquer avec le premier serveur SV1.

Le deuxième serveur SV2 comporte également un module MF2 apte à exécuter une fonction logicielle F2.

La mémoire morte de type ROM du deuxième serveur SV2 comporte des registres mémorisant un programme d'ordinateur PGA comportant des instructions de code adaptées à mettre en oeuvre une fonction logicielle F2.

Un mode de réalisation d'un procédé d'obtention et d'un procédé de fourniture, mis en oeuvre dans le système SYS, va maintenant être décrit en référence à la **figure 5****.**

Lors d'une étape S0, un utilisateur U du terminal T accède au navigateur web NV de ce terminal et saisit une adresse du premier serveur SV1.

Plus précisément, l'adresse saisie est typiquement une URL (« Uniform Ressource Location ») prédéfinie d'un service web WS1 hébergé sur le premier serveur SV1.

Le terminal T obtient ainsi, lors d'une étape S2, une page web WP1 fournie par le premier serveur SV1.

La page Web WP1 est affichée sur l'écran ECR du terminal T.

L'affichage de la page WP1 comprend ici l'affichage d'une interface graphique INT2.

L'interface de saisie INT2 est typiquement un formulaire de saisie.

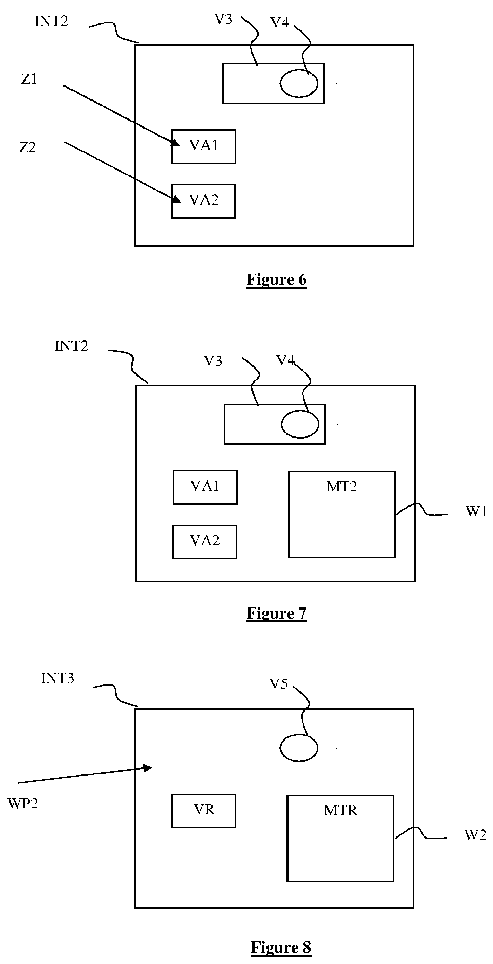

La **figure 6** illustre un exemple d'interface graphique INT2.

L'interface graphique INT2 permet à l'utilisateur U de saisir des valeurs de paramètres et de commander l'exécution d'une ou plusieurs fonctions utilisant ces paramètres.

A cet effet, l'interface graphique INT2 contient une ou plusieurs zones pour la saisie des valeurs de paramètres.

Par exemple, une première zone Z1 permet la saisie d'une valeur VA1 d'un premier paramètre P1 et une deuxième zone Z2 permet la saisie d'une valeur VA2 d'un deuxième paramètre P2.

A titre d'alternative, le formulaire ne propose pas de saisie de paramètres ou le nombre de paramètres à saisir est plus petit ou plus grand que deux.

L'interface graphique INT2 comprend également une première vignette V3 et une deuxième vignette V4 associée à la première vignette V3.

La première vignette V3 permet à l'utilisateur de commander l'exécution d'une fonction logicielle FL du service Web WS1 et d'obtenir un résultat d'exécution de cette fonction.

Dans le mode de réalisation décrit, lors de son exécution, la fonction logicielle FL sollicite un module logiciel MF2 hébergé sur le deuxième serveur SV2. Le module MF2 est apte à exécuter une fonction logicielle F2 interrogeable via une interface de programmation (API).

Lors d'une étape S4, l'utilisateur saisit une valeur VA1 pour le paramètre P1 et une valeur VA2 pour le paramètre P2.

De façon connue, les valeurs demandées peuvent être de différents types (valeur numérique, texte...), de format prédéterminé (longueur, ...), choisies dans une liste déroulante prédéfinie...et un contrôle de la conformité des valeurs saisies est effectué.

Lors d'une étape S6, l'utilisateur U clique sur une des vignettes V3 ou V4 et le module de détection DTA du terminal T détecte une action utilisateur relative à la vignette V3 ou à la vignette V4.

Dans le cas où lors de l'étape S6, le module de détection DTA détecte une action utilisateur relative à la deuxième vignette V4, l'étape S6 est suivie d'une étape S8 lors de laquelle une requête RQ1 contenant une commande de code CdC est envoyée par le module de communication COM du terminal T au premier serveur SV 1.

La requête RQ1 représente une requête d'instruction de code.

La commande de code CdC comprend un identifiant ICC de la commande CdC et les valeurs VA1 et VA2 saisies lors de l'étape S4.

La requête RQ1 est dans ce mode de réalisation une requête de type HTTP (« Hypertext Transfer Protocol »).

La commande de code CdC est formulée dans un langage LP1. Le langage LP1 est un langage connu du premier serveur SV1 et interprétable par celui-ci.

Le langage LP1 représente un premier langage au sens de l'invention.

La requête RQ1 contenant la commande de code CdC est reçue par le premier module de communication CO1 du premier serveur SV1 lors d'une étape S10.

Puis, lors d'une étape S12, le module de détermination DET du premier serveur SV1 détermine une commande d'instruction de code CD1 en fonction de la requête RQ1 et des valeurs VA1 et VA2 reçues.

La commande CD1 représente ici une instruction de code. Elle est formulée dans un langage de programmation prédéfini LP2. Elle est exécutable par le deuxième serveur SV2.

Le langage LP2 est par exemple le langage CURL, le langage JSON (« JavaScript Object Notation »)...

Le langage LP2 représente un deuxième langage au sens de l'invention.

La commande CD1 contient en paramètre les valeurs VA1 et VA2.

A titre d'alternative, la commande CD1 comprend également une ou plusieurs valeurs d'un ou plusieurs paramètres insérées par le module de détermination DET du premier serveur SV1.

Un paramètre inséré est par exemple une donnée chiffrée avec une clé de l'utilisateur U partagée par le premier serveur SV1 et le deuxième serveur SV2. La clé de l'utilisateur U est par exemple enregistrée dans une mémoire accessible par le premier serveur SV1 et obtenue par le premier serveur SV1 après une phase d'authentification de l'utilisateur U.

L'étape S 12 est suivie d'une étape S 14 lors de laquelle le module de construction de message CMS du premier serveur SV1 construit un message MT2 de type texte contenant la commande d'instruction de code CD1.

Puis, lors d'une étape S16, le module de communication CO2 du premier serveur SV1 transmet à destination du terminal T une réponse RP1 à la requête RQ1.

La réponse RP1 contient le message textuel MT2.

Le message MT2 de type « texte » est encapsulé dans la réponse RP1. La réponse RP1 est de type HTML. Elle contient une page web ou une partie de page HTML.

La réponse RP1 est reçue par le terminal T, et plus précisément par le navigateur web du terminal T, via le module de communication COM, lors d'une étape S18.

Lors d'une étape S20, le module d'affichage AFF du terminal T affiche une fenêtre supplémentaire W1 contenant le message texte MT2, c'est-à-dire la commande d'instruction de code CD 1.

La **figure 7** illustre l'interface graphique INT2 dans laquelle la fenêtre W1 contenant le message MT2 est affichée.

L'utilisateur U peut ensuite récupérer le contenu affiché, par exemple par une opération de « copier/coller » et l'insérer dans une application logicielle en cours de développement.

Dans le cas où, lors de l'étape S6, le module de détection DTA du terminal T détecte une action relative à la première vignette V3, l'étape S6 est suivie d'une étape S30, lors de laquelle une requête RQ2 contenant une commande d'exécution CdE est envoyée au premier serveur SV1.

La commande d'exécution CdE comprend un identifiant ICE de la commande CdE et les valeurs VA1 et VA2 saisies lors de l'étape S4. La commande CdE est formulée dans le premier langage LP1.

La requête RQ2 est reçue par le premier module de communication CO1 du premier serveur S1 lors d'une étape S32.

Puis, lors d'une étape S34, le module de détermination DET du premier serveur SV1 détermine une commande d'instruction de code CD2 en fonction de la requête RQ2, c'est-à-dire en fonction de la commande d'exécution CdE et des valeurs VA1 et VA2 reçues.

Dans la mesure où les valeurs VA1 et VA2 n'ont pas été modifiées par l'utilisateur U, la commande CD2 est la commande CD1 construite lors de l'étape S 12.

La commande CD2 est formulée dans le deuxième langage LP2.

La commande CD2 est enregistrée dans une mémoire, par exemple une mémoire temporaire, du premier serveur SV1.

L'étape S34 est suivie d'une étape S36 lors de laquelle le deuxième module de communication CO2 du premier serveur SV1 transmet au deuxième serveur SV2, une requête RQ3 contenant la commande CD2 déterminée lors de l'étape S34.

Puis, lors d'une étape S38, le deuxième serveur SV2 reçoit la requête RQ3 via son module de communication CO2, traite cette requête RQ3 et transmet une réponse RP3 au premier serveur SV1.

Le traitement de la requête RQ3 par le deuxième serveur SV2 comprend l'exécution de la commande CD2 par le programme d'ordinateur PGA.

En d'autres termes, le module MF2 du deuxième serveur SV2 exécute la fonction logicielle F2 et détermine un résultat d'exécution RES.

Le résultat RES est formulé dans le même langage de programmation LP2 que la commande CD2. Le résultat RES contient par exemple un statut ou un ou plusieurs valeurs de paramètres.

Il contient par exemple une valeur VR d'un paramètre P3.

La réponse RP3 à la requête RQ3 contient le résultat RES.

L'étape S38 est suivie d'une étape S40 lors de laquelle le premier serveur SV1 reçoit la réponse RP3, convertit la réponse RP3 en une réponse RP2 et transmet à destination du terminal T, la réponse RP2 à la requête RQ2.

La conversion de la réponse RP3 en une réponse RP2 comprend notamment un changement de format. La réponse RP2 est ici de type HTML.

La réponse RP2 est dans le mode de réalisation décrit, une page web WP2 contenant d'une part la valeur VR et d'autre part une vignette V5.

L'étape S40 comprend également un enregistrement, dans une mémoire accessible par le premier serveur SV1, du résultat RES contenu dans la réponse RP3.

Lors d'une étape S42, suite à la réception de la réponse RP2, le terminal T reçoit la réponse RP2 et affiche une deuxième page Web WP2 contenant la réponse RP2, et en conséquence la valeur VR.

La page web WP2 affichée comprend également la vignette V5.

La vignette V5 est une vignette permettant de demander l'obtention des instructions de code du résultat RES.

Un message signalant le rôle de la vignette V5 est par exemple indiqué dans la page web WP2.

La **figure 8** illustre une interface graphique INT3 contenant la page web WP2

A titre d'alternative, la valeur VR et la vignette V5 sont affichées dans la page Web WP1 ou dans une fenêtre supplémentaire de la page web WP1.

Lors d'une étape S50, le module de détection DTA du terminal T détecte une action utilisateur relative à la vignette V5.

L'étape S50 est suivie d'une étape S52 lors de laquelle une requête RQ4 contenant une commande de code CdR est envoyée par le module de communication COM du terminal T au premier serveur SV1.

La commande de code CdR est formulée dans le premier langage LP1.

La commande de code CdR comprend un identifiant ICR de la commande CdR.

La requête RQ4 contenant la commande de code CdR est reçue par le premier module de communication CO1 du premier serveur SV1 lors d'une étape S54.

Puis, lors d'une étape S56, le module de construction de message CMS du premier serveur SV1 détermine un message textuel MTR contenant d'une part la commande d'instruction de code CD2 enregistrée lors de l'étape S34 et d'autre part le résultat RES obtenu par exécution de la commande CD2 et enregistré lors de l'étape S40.

Puis, lors d'une étape S58, le module de traitement de requêtes TRQ du premier serveur SV1 construit une réponse RP4 à la requête RQ4 et commande la transmission de la réponse RP4 par le module de communication CO2 du premier serveur SV1 à destination du terminal T.

La réponse RP4 contient le message textuel MTR.

La réponse RP4 est de type HTML.

La réponse RP4 est reçue par le terminal T, et plus précisément par le navigateur web du terminal T, via le module de communication COM, lors d'une étape S60.

Lors d'une étape S62, le module d'affichage AFF du terminal T affiche dans l'interface graphiqueINT2, une fenêtre supplémentaire W2 contenant le message texte MTR.

La figure 8 illustre l'interface graphique INT3 dans laquelle la fenêtre W2 contenant le message MTR est affichée.

L'utilisateur U peut ensuite récupérer le contenu du message MTR affiché, par exemple par une opération de « copier/coller », et l'insérer dans une application logicielle en cours de développement.

Les étapes S0, S2, S4, S8, S18, S20, S30, S42 à S52S60 et S62 mises en oeuvre par le terminal T, représentent les étapes du procédé d'obtention.

Les étapes S10, S12, S14, S16, S32, S34, S36, S40, S54, S56 et S58 mises en oeuvre par le premier serveur SV1, représentent les étapes du procédé de fourniture.

## Revendications

1. Procédé d'obtention d'aide au développement d'une application logicielle, le procédé comportant une étape d'affichage (E0, S2) sur un écran (ECR) d'une interface graphique (INT, INT2) comprenant au moins une première vignette (V1, V3), une détection (E2, S6) d'une action d'un utilisateur relativement à ladite au moins une première vignette déclenchant une exécution d'une fonction logicielle (F1, FL) associée à ladite au moins une première vignette,
**caractérisé en ce qu'**il comporte les étapes suivantes, mises en oeuvre par un terminal (T) :
affichage (E0,S2) d'au moins une deuxième vignette (V2, V4) associée à ladite au moins une première vignette ;
détection (E2, S6) d'une action utilisateur relative à ladite au moins une deuxième vignette
Suite à ladite détection, obtention (E6, S18) d'un message textuel (MT, MT2) contenant au moins une instruction de code relative à l'exécution de ladite fonction logicielle ;
affichage (E8, S20) dudit message textuel.

2. Procédé d'obtention selon la revendication 1 dans lequel ladite fonction logicielle est exécutée par un premier serveur (SV1) et sollicite un module prédéfini (MF2) hébergé sur un deuxième serveur (SV2) et ladite au moins une instruction de code est exécutable par ledit module.

3. Procédé d'obtention selon la revendication 2 comportant
une étape d'envoi au premier serveur d'une requête d'instruction de code, ladite requête étant formulée dans un premier langage;
et dans lequel ledit message textuel est reçu dans une réponse à ladite requête, ladite réponse est formulée dans le premier langage et ladite au moins une instruction de code est formulée dans un deuxième langage.

4. Procédé d'obtention selon la revendication 2 comportant
Une étape de réception d'une demande de paramètres contenant au moins un identifiant d'au moins un paramètre dudit module ;
Une étape d'obtention au moyen d'une interface utilisateur dudit terminal, d'au moins une valeur pour ledit au moins un paramètre ;
une étape d'envoi au premier serveur d'une requête d'instruction de code, ladite requête contenant au moins une valeur pour ledit au moins un paramètre ;
et dans lequel ledit message textuel est reçu dans une réponse à ladite requête et ladite au moins une instruction de code est déterminée par ledit premier serveur en fonction de ladite au moins une valeur reçue.

5. Procédé d'obtention selon l'une des revendications 3 ou 4 dans lequel ladite réponse comprend en outre un deuxième message textuel contenant une réponse à ladite commande formulée par ledit module

6. Procédé de fourniture d'aide au développement d'une application logicielle **caractérisé en ce qu'**il comporte les étapes suivantes, mises en oeuvre par un premier serveur (SV1) apte à exécuter une fonction logicielle (FL) sollicitant un module prédéfini (MF2) hébergé sur un deuxième serveur (SV2) :
réception (S10) en provenance d'un terminal (T) d'une requête d'instruction de code (RQ1) ;
détermination (S12) d'une commande (CD1) contenant au moins une instruction de code exécutable par ledit module ;
construction (S14) d'un message textuel (MT2) contenant ladite commande ;
transmission (S16) d'une réponse (RP1) à ladite requête contenant le message textuel construit (MT2).

7. Procédé de fourniture selon la revendication 6 comportant une étape de transmission à destination dudit terminal, d'une demande de paramètres contenant au moins un identifiant d'au moins un paramètre dudit module ;
dans lequel la requête d'instruction de code contient au moins une valeur pour ledit au moins un paramètre ; et
dans lequel ladite commande est déterminée en fonction de ladite au moins une valeur reçue.

8. Procédé de fourniture selon l'une des revendications 6 ou 7 dans lequel ladite commande comprend au moins une valeur d'au moins un paramètre supplémentaire insérée par ledit premier serveur.

9. Procédé de fourniture selon l'une des revendications 6 à 8 dans lequel la requête d'instruction de code comprend au moins une valeur définissant au moins un paramètre de langage de programmation et dans lequel la dite commande est formulée dans ledit langage.

10. Procédé de fourniture selon l'une des revendications 6 à 9 comportant une étape d'authentification dudit utilisateur et dans lequel la réponse ne contient pas ladite commande et contient un message signalant un problème d'authentification si l'authentification n'est pas réussie.

11. Terminal (T) comportant un module d'affichage (AFF) pour afficher sur un écran (ECR) une interface graphique (INT, INT2) comprenant au moins une première vignette (V1, V3), un module de détection d'une action d'un utilisateur (DTA), déclenchant une exécution d'une fonction logicielle (F1, FL) associée à ladite au moins une première vignette, **caractérisé en ce que**:
le module d'affichage (AFF) est configuré pour afficher au moins une deuxième vignette (V2, V4) associée à ladite au moins une première vignette ;
le terminal comporte un module d'obtention (OBM) pour obtenir, suite à une détection d'une action utilisateur relative à ladite au moins une deuxième vignette, un message textuel (MT, MT2) contenant au moins une instruction de code relative à l'exécution de ladite fonction logicielle ; et
le module d'affichage (AFF) est configuré pour afficher ledit message textuel.

12. Serveur (SV1) apte à exécuter une fonction logicielle (FL) sollicitant un module prédéfini (MF2) hébergé sur un deuxième serveur (SV2) **caractérisé en ce qu'**il comporte :
un module de réception (CO1) en provenance d'un terminal (T) d'une requête d'instruction de code (RQ1) ;
un module de détermination (DET) d'une commande (CD1) contenant au moins une instruction de code exécutable par ledit module ;
un module de construction (CMS) d'un message textuel (MT2) contenant ladite commande ; et
un module de transmission (CO1) d'une réponse à ladite requête contenant le message textuel construit.
